(19) Europäisches Patentamt
European Patent Office
Office européen des brevets

(11) Veröffentlichungsnummer: **0 507 075 B1**

(12) **EUROPÄISCHE PATENTSCHRIFT**

(45) Veröffentlichungstag der Patentschrift: **28.06.95**

(51) Int. Cl.6: **C08F 255/02**, //(C08F255/02, 230:08)

(21) Anmeldenummer: **92103216.5**

(22) Anmeldetag: **26.02.92**

(54) **Teilvernetzte Kunststoffmasse aus Polymerisaten des Propylens und des Ethylens.**

(30) Priorität: **09.03.91 DE 4107665**

(43) Veröffentlichungstag der Anmeldung: **07.10.92 Patentblatt 92/41**

(45) Bekanntmachung des Hinweises auf die Patenterteilung: **28.06.95 Patentblatt 95/26**

(84) Benannte Vertragsstaaten: **BE DE FR GB NL**

(56) Entgegenhaltungen:
**EP-A- 0 004 034**
**EP-A- 0 412 518**
**DE-A- 3 327 149**
**DE-A- 3 520 106**

(73) Patentinhaber: **BASF Aktiengesellschaft**
**Carl-Bosch-Strasse 38**
**D-67063 Ludwigshafen (DE)**

(72) Erfinder: **Brosius, Sibylle, Dr.**
**Cordovastrasse 29**
**W-6700 Ludwigshafen (DE)**
Erfinder: **Seiler, Erhard, Dr.**
**Erpolzheimer Strasse 1**
**W-6700 Ludwigshafen (DE)**
Erfinder: **Schwager, Harald, Dr.**
**Ziegelofenweg 7**
**W-6720 Speyer (DE)**
Erfinder: **Kress, Gerhard, Dr.**
**Liebermannstrasse 7**
**W-6700 Ludwigshafen (DE)**
Erfinder: **Schlemmer, Lothar**
**Duisbergstrasse 1a**
**W-6701 Maxdorf (DE)**

**EP 0 507 075 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine teilvernetzte Kunststoffmasse aus Polymerisaten des Propylens und des Ethylens, enthaltend

a) ein Polymerisat aus 25 bis 95 Gew.-% Polypropylen und 5 bis 75 Gew.-% eines Propylencopolymerisats mit einpolymerisierten $C_2$-$C_{10}$-Alk-1-enen, wobei der Comonomerengehalt 1 bis 45 Gew.-%, bezogen auf das Gesamtpolymerisat beträgt,

b) ein statistisch verteiltes Ethylencopolymerisat mit 5 bis 20 Gew.-% an einpolymerisierten $C_3$-$C_{10}$-Alk-1-enen und einer Dichte bei Raumtemperatur von 0,89 bis 0,925 g/cm$^3$ und

c) eine Organosilanverbindung der folgenden Formel (I)

$A_{4-n}SiR_n$ (I),

wobei A gleich oder verschieden ist und für einen Acryl- oder Methacrylsäureester oder für eine Vinylgruppe steht, R gleich oder verschieden ist und eine $C_1$-$C_8$-Alkoxy- oder $C_1$-$C_8$-Acetoxygruppe bedeutet und n für die Zahlen 1, 2 oder 3 steht,

erhältlich durch Umsetzung einer Polymermischung aus dem Polymerisat a) und dem statistisch verteilten Ethylencopolymerisat b) mit der Organosilanverbindung c) in Anwesenheit eines radikalischen Initiators und eines Kondensationskatalysators, bei Temperaturen von 180 bis 280 °C, Drücken von 1 bis 100 bar und mittleren Verweilzeiten des Reaktionsgemisches von 0,2 bis 10 Minuten.

Außerdem betrifft die vorliegende Erfindung die Verwendung der erfindungsgemäßen teilvernetzten Kunststoffmassen zur Herstellung von Folien und Formkörpern.

Es ist bekannt, Polyethylene und Copolymerisate des Ethylens mit Vinylsilanen zunächst zu pfropfen und anschließend mit Hilfe eines Silanolkondensationskatalysators zu vernetzen (DE-A 26 11 491, US-A 3 646 155, GB-A 1 406 680, GB-A 1 408 154). Auf diese Weise erhält man Polymerisate mit verbesserten mechanischen Eigenschaften, insbesondere einer höheren Festigkeit.

Die Vernetzung von Polypropylen oder Copolymerisaten des Propylens mit ungesättigten Silanen in Gegenwart eines Silanolkondensationskatalysators und eines Peroxids wird ferner in den Offenlegungsschriften DE-A 33 27 149 und DE-A 35 20 106 beschrieben. Die dabei erhaltenen Polymerisate zeichnen sich durch eine hohe Kälteschlagzähigkeit und Formbeständigkeit aus.

Vernetzte Polymerisate weisen gegenüber nicht vernetzten Polymerisaten den Vorteil einer höheren mechanischen Stabilität auf. Vernetzte Materialien lassen sich aber aufgrund ihres geringen Schmelzflusses thermisch nicht mehr mit den in der Kunststofftechnik üblichen Methoden verformen (H. G. Elias "Makromoleküle", Verlag Hüthig & Wepf, 4. Auflage, Seite 1000-1003).

Für die Verarbeitung von Polymerisaten ist es deshalb notwendig, darauf zu achten, daß der Vernetzungsgrad der Polymerisate nicht zu hoch liegt, so daß diese noch mit den in der Kunststofftechnik üblichen Apparaturen verformt werden können.

Eine Möglichkeit der Verknüpfung von guten Eigenschaften hinsichtlich der Stabilität in bezug auf Formveränderungen und mechanischer Beanspruchungen, sowie Beständigkeit gegenüber Chemikalien einerseits und einer leichten Verarbeitbarkeit andererseits, besteht darin, Polymerisate mit niedermolekularen Weichmachern zu modifizieren. Derartige Weichmacher werden insbesondere bei Polyvinylchlorid verwendet, um dessen Verarbeitbarkeit zu erhöhen. Dabei treten jedoch häufig Probleme bezüglich der Beständigkeit derartiger Weichmacher auf, da diese oft aus dem Polymerisat wieder austreten, so daß die Weichmacherwirkung nach einiger Zeit teilweise deutlich nachläßt. Häufig sind Weichmacher toxisch nicht unbedenklich, was außerdem zur Folge hat, daß ihre Anwendbarkeit im Lebensmittel- oder Hygienebereich eingeschränkt ist.

Der Erfindung lag daher die Aufgabe zugrunde, eine Kunststoffmasse zu entwickeln, die die Vorteile von vernetzten Polymerisaten bezüglich ihrer mechanischen Festigkeit mit denen von unvernetzten Polymerisaten bezüglich ihrer leichten Verarbeitbarkeit miteinander vereinigt und darüber hinaus auf einfache Art und ohne Zusatz von niedermolekularen Weichmachern hergestellt werden kann.

Demgemäß wurden die eingangs definierten, teilvernetzten Kunststoffmassen gefunden.

Die erfindungsgemäßen Kunststoffmassen enthalten ein Polymerisat a) aus 25 bis 95 Gew.-% Polypropylen und 5 bis 75 Gew.-% eines Propylencopolymerisats mit einpolymerisierten $C_2$-$C_{10}$-Alk-1-enen, wobei der Comonomerengehalt 1 bis 45 Gew.-%, bezogen auf das Gesamtpolymerisat, beträgt. Bevorzugt sind dabei Kunststoffmassen, deren Polymerisat a) aus 50 bis 90 Gew.-% Polypropylen und 10 bis 50 Gew.-% eines Propylencopolymerisats besteht, wobei deren Gehalt an einpolymerisierten $C_2$-$C_{10}$-Alk-1-enen bei 2 bis 35 Gew.-%, bezogen auf das Gesamtpolymerisat, liegt. Unter einpolymerisierten $C_2$-$C_{10}$-Alk-1-enen sind in diesem Zusammenhang insbesondere Ethylen, But-1-en, Pent-1-en, Hex-1-en, Hept-1-en oder Oct-1-en

oder Gemische aus diesen Comonomeren zu verstehen, wobei bevorzugt Ethylen oder But-1-en eingesetzt werden.

Die Herstellung des erfindungsgemäß zu verwendenden Polymerisats a) kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man auch eine Reihe von mehreren hintereinander geschalteten Rührkesseln einsetzen kann. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren sowohl in der Gasphase, als auch in Lösung oder in einer Aufschlämmung durchgeführt werden. Die Ziegler-Natta-Katalysatoren enthalten u.a. neben einer titanhaltigen Feststoffkomponente noch Cokatalysatoren. Als Cokatalysatoren kommen dabei Aluminiumverbindungen zusammen mit Elektronendonorverbindungen in Frage.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel $SiO_2 \cdot aAl_2O_3$, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 $\mu$m, insbesondere von 10 bis 300 $\mu$m, ein Porenvolumen von 0,1 bis 10 $cm^3/g$, insbesondere von 1,0 bis 5,0 $cm^3/g$ und eine spezifische Oberfläche von 10 bis 1000 $m^2/g$, insbesondere von 100 bis 500 $m^2/g$ auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-($C_1$-$C_{10}$-alkyl)-Verbindungen verwendet werden. Daneben kann die titanhaltige Feststoffkomponente noch Halogen, bevorzugt Chlor oder Brom, enthalten.

Außerdem enthält die titanhaltige Feststoffkomponente noch Elektronendonorverbindungen, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel II

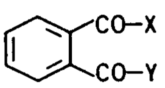

II

verwendet, wobei X und Y jeweils für Chlor oder einen $C_1$- bis $C_{10}$-Alkoxyrest oder gemeinsam für Sauerstoff stehen. Besonders bevorzugte Elektronendonorverbindungen sind Phthalsäureester, wobei X und Y $C_1$-$C_8$-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. $C_1$- bis $C_{15}$-Alkanole, $C_5$- bis $C_7$-Cycloalkanole, die ihrerseits $C_1$- bis $C_{10}$-Alkylgruppen tragen können, ferner Phenole, Naphthole sowie die $C_1$-$C_{10}$-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 86 473, der EP-A 171 200, der GB-A 2 111 066 und der US-A 4 857 613 beschrieben.

Bei der Herstellung der titanhaltigen Feststoffkomponente wird bevorzugt das nachstehende dreistufige Verfahren angewandt.

In der ersten Stufe versetzt man zunächst einen feinteiligen Träger, bevorzugt Siliciumdioxid oder $SiO_2 \cdot aAl_2O_3$ mit einem Wassergehalt von 0,5 bis 5 Gew.-% - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120 °C rührt.

Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein $C_1$- bis $C_8$-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel II hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150 °C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150 °C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit Cokatalysatoren als Ziegler-Natta-Katalysatorensystem verwendet. Als Cokatalysatoren kommen dabei Aluminiumverbindungen und Elektronendonorverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist.

Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Besonders geeignete Elektronendonorverbindungen sind dabei siliciumorganische Verbindungen der allgemeinen Formel III

$R^1{}_nSi(OR^2)_{4-n}$ III

wobei $R^1$ gleich oder verschieden ist und eine $C_1$- bis $C_{20}$-Alkylgruppe, eine 5- bis 7-gliedrige Cycloalkylgruppe, die ihrerseits eine $C_1$- bis $C_{10}$-Alkylgruppe tragen kann, oder eine $C_6$- bis $C_{20}$-Aryl- oder Arylalkylgruppe bedeutet, $R^2$ gleich oder verschieden ist und eine $C_1$- bis $C_{20}$-Alkylgruppe bezeichnet und n für die Zahlen 1, 2 oder 3 steht. Besonders bevorzugt werden dabei solche Verbindungen, in denen $R^1$ eine $C_1$- bis $C_8$-Alkylgruppe oder eine 5- bis 7-gliedrige Cycloalkylgruppe, $R^2$ eine $C_1$- bis $C_4$-Alkylgruppe und n die Zahlen 1 oder 2 bedeuten.

Unter diesen Verbindungen sind Dimethoxydiisopropylsilan, Dimethoxyisobutylisopropylsilan, Dimethoxydiisobutylsilan, Dimethoxydicyclopentylsilan und Diethoxyisobutyisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 1:1 bis 800:1, insbesondere 2:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die Katalysatorbestandteile können in beliebiger Reihenfolge einzeln oder als Gemisch der Komponenten in das Polymerisationssystem eingebracht werden.

Mit Hilfe derartiger Katalysatorsysteme können die erfindungsgemäß einzusetzenden Polymerisate a) hergestellt werden. In einem bevorzugten Herstellungsverfahren wird dabei in einer ersten Polymerisationsstufe Propylen polymerisiert und dem daraus erhältlichen Propylenhomopolymerisat in einer zweiten Polymerisationsstufe ein Gemisch aus Propylen und einem oder mehreren $C_2$-$C_{10}$-Alk-1-enen hinzupolymerisiert.

Die Polymerisation des Propylens wird in der ersten Polymerisationsstufe bei einem Druck von 20 bis 40 bar, einer Temperatur von 60 bis 90 °C und einer mittleren Verweilzeit des Reaktionsgemisches von 1 bis 5 Stunden durchgeführt. Bevorzugt sind dabei Drücke von 20 bis 35 bar, Temperaturen von 65 bis

85 °C und mittlere Verweilzeiten von 1,5 bis 4 Stunden. Man wählt die Reaktionsbedingungen vorzugsweise so, daß in der ersten Polymerisationsstufe pro mmol der Aluminiumkomponente 0,05 bis 2 kg, bevorzugt 0,1 bis 1,5 kg, Polypropylen gebildet werden.

Dieses Polypropylen wird nach Beendigung der Reaktion mit dem Katalysator aus der ersten Polymerisationsstufe ausgetragen und in die zweiten Polymerisationsstufe eingeführt, wo diesem ein Gemisch von Propylen und einem oder mehreren $C_2$-$C_{10}$-Alk-1-enen hinzupolymerisiert wird. Der in der zweiten Polymerisationsstufe vorherrschende Druck liegt 7, bevorzugt 10 bar, unter dem der ersten Polymerisationsstufe und beträgt 5 bis 30, vorzugsweise 10 bis 25 bar. Die Temperatur liegt bei 30 bis 100, bevorzugt bei 35 bis 80 °C und die mittlere Verweilzeit des Polymerisats beträgt 1 bis 5 Stunden, bevorzugt 1,5 bis 4 Stunden. In dieser zweiten Polymerisationsstufe wird das Verhältnis der Partialdrücke zwischen Propylen und den einpolymerisierten $C_2$-$C_{10}$-Alk-1-enen auf 0,1:1 bis 10:1 eingestellt. Durch geeignete Wahl der Reaktionsparameter sollte ferner darauf geachtet werden, daß das Gewichtsverhältnis zwischen den in der ersten und den in der zweiten Polymerisationsstufe umgesetzten Monomeren 0,2:1 bis 20:1, insbesondere 0,4:1 bis 15:1, beträgt.

Als weiterer Bestandteil der erfindungsgemäßen teilvernetzten Kunststoffmasse wird ein statistisch verteiltes Ethylencopolymerisat b, mit 5 bis 20 Gew.-% an einpolymerisierten $C_3$-$C_{10}$-Alk-1-enen verwendet, dessen Dichte bei Raumtemperatur 0,89 bis 0,925 g/cm$^3$ beträgt. Bevorzugt wird dabei ein solches statistisch verteiltes Ethylencopolymerisat b) eingesetzt, das 8 bis 20 Gew.-% einpolymerisierter $C_3$-$C_{10}$-Alk-ene enthält. Unter einpolymerisierten $C_3$-$C_{10}$-Alk-1-enen sind in diesem Zusammenhang insbesondere Propylen, But-1-en, Pent-1-en, Hex-1-en, Hept-1-en oder Oct-1-en oder Gemische aus diesen Comonomeren zu verstehen, wobei bevorzugt Propylen, But-1-en, Hex-1-en oder Oct-1-en verwendet werden.

Die Herstellung derartiger statistisch verteilter Ethylencopolymerisate erfolgt durch Niederdruckpolymerisation der Comonomere mit metallhaltigen Katalysatoren, beispielsweise mit Hilfe von titan- und aluminiumhaltigen Ziegler-Katalysatoren. Die Polymerisationsreaktion kann dabei mit den in der Technik üblichen Reaktoren, beispielsweise Rührkesseln, sowohl in der Gasphase, in Lösung oder auch in einer Aufschlämmung durchgeführt werden. In einem bevorzugt angewandten Verfahren stellt man die erfindungsgemäß eingesetzten Ethylencopolymerisate (b) durch Gasphasenpolymerisation mit Hilfe von Ziegler-Katalysatoren bei Drücken von 10 bis 100 bar, Temperaturen von 30 bis 100 °C und mittleren Verweilzeiten von 0,5 bis 5 Stunden her. Bei diesem Verfahren wird das Partialdruckverhältnis zwischen Ethylen und den $C_3$-$C_{10}$-Alk-1-enen auf 2:1 bis 100:1 eingestellt.

Bei der Herstellung der erfindungsgemäßen teilvernetzten Kunststoffmasse wird das Polymerisat a) mit der Organosilanverbindung c) umgesetzt. Die Organosilanverbindung c) bewirkt dabei eine teilweise Vernetzung der Polymermischung. Das in der erfindungsgemäßen teilvernetzten Kunststoffmasse ebenfalls noch vorliegende statistisch verteilte Ethylencopolymerisat b) kann dem Polymerisat a) sowohl vor als auch nach der Umsetzung mit der Organosilanverbindung c) beigemischt werden.

Als Organosilanverbindung c) werden dabei Verbindungen der folgenden Formel (I) eingesetzt,

$$A_{4-n}SiRn\ , \qquad (I)$$

wobei A gleich oder verschieden ist und für einen Acryl- oder Methacrylsäureester oder für eine Vinylgruppe steht, R gleich oder verschieden ist und eine $C_1$-$C_8$-Alkoxy- oder $C_1$-$C_8$-Acetoxygruppe bedeutet und n für die Zahlen 1, 2 oder 3 steht. Bevorzugt werden dabei solche Organosilanverbindungen c) eingesetzt, bei denen R für eine $C_1$-$C_8$-Alkoxygruppe und n für die Zahl 3 steht. Unter diesen Verbindungen sind insbesondere 3-Methacryloxypropyl-trimethoxysilan, Vinyltrimethoxysilan und Vinyltriethoxysilan hervorzuheben. In geringem Umfang können neben der Organosilanverbindung c) noch Ester der Acryl- bzw. Methacrylsäure als weitere Vernetzer verwendet werden.

Die erfindungsgemäße, teilvernetzte Kunststoffmasse ist erhältlich durch Umsetzung einer Polymermischung aus dem Polymerisat a) und dem statistisch verteilten Ethylencopolymerisat b) mit der Organosilanverbindung c) in Anwesenheit eines radikalischen Initiators und eines Kondensationskatalysators bei Temperaturen von 180 bis 280 °C, Drücken von 1 bis 100 bar und mittleren Verweilzeiten des Reaktionsgemisches von 0,2 bis 5 Minuten. Bevorzugt sind dabei Temperaturen von 190 bis 260 °C, Drücke von 1 bis 50 bar und mittlere Verweilzeiten von 0,2 bis 5 Minuten. Die Umsetzung der einzelnen Komponenten erfolgt in den in der Kunststoffverarbeitung üblicherweise zur Vereinigung von Stoffen eingesetzten Apparaturen, beispielsweise in Trommelmischern, in Mühlen, in Schnecken- oder Scheibenextrudern, in Walzwerken oder Knetern.

Als radikalische Initiatoren werden vorzugsweise organische Peroxide oder Azoverbindungen eingesetzt. Bevorzugt werden dabei solche organischen Als radikalische Initiatoren werden vorzugsweise organische Peroxide oder Azoverbindungen eingesetzt. Bevorzugt werden dabei solche organischen Peroxidverbindungen verwendet, die bei einer Temperatur von 210 °C Halbwertszeiten von 1 bis 30 Sekunden aufweisen. Innerhalb dieser Verbindungen sind insbesondere Dicumylperoxid, Monocumyl(tert.butyl)peroxid, Di-(tert.butyl)peroxid, 2,5-Dimethyl-2,5-di(tert.butylperoxy)hexan und 2,5-Dimethyl-2,5-di(tert.butylperoxy)hexin-(3) hervorzuheben.

Als Kondensationskatalysatoren eignen sich insbesondere Carbonsäuresalze des Zinns, Eisens, Bleis, Zinks oder des Titans, wobei die Carbonsäuresalze des Zinns bevorzugt sind. Besonders geeignet sind dabei Verbindungen wie Dibutylzinndilaurat, Dibutylzinndiacetat oder Dibutylzinnoctoat. Daneben können auch Chelate der Titansäure oder Alkylamine eingesetzt werden. Zur Beschleunigung der Umsetzung der Polymermischung mit der Organosilanverbindung c) können dem Reaktionsgemisch ferner noch Wasser oder wasserabspaltende Mittel, beispielsweise Hydrate, hinzugefügt werden.

In einer bevorzugten Ausführungsform enthält die erfindungsgemäße, teilvernetzte Kunststoffmasse als weiteren Bestandteil ein statistisch verteiltes Propylencopolymerisat d) mit 1 bis 10 Gew.-% an einpolymerisierten $C_2$-$C_{10}$-Alk-1-enen. Bevorzugt ist dabei ein solches statistisch verteiltes Propylencopolymerisat d), dessen Gehalt an $C_2$-$C_{10}$-Alk-1-enen bei 2 bis 8 Gew.-% liegt. Als $C_2$-$C_{10}$-Alk-1-ene sind in diesem Zusammenhang insbesondere Ethylen, But-1-en, Pent-1-en, Hex-1-en, Hept-1-en sowie Oct-1-en oder Gemische aus diesen Comonomeren zu nennen, wobei bevorzugt Ethylen sowie But-1-en verwendet werden.

Die Herstellung derartiger statistisch verteilter Propylencopolymerisate d) kann mit den in der Polymerisationstechnik üblichen Ziegler-Natta-Katalysatoren sowohl in der Gasphase, als auch in Lösung oder in einer Aufschlämmung durchgeführt werden. Geeignete Reaktoren für diese Propylencopolymerisate d) sind u.a. absatzweise oder kontinuierlich betriebene Rührkessel, wobei man auch eine Reihe von mehreren hintereinander geschalteten Rührkesseln einsetzen kann. Die Reaktoren enthalten eine Festbett aus feinteiligem Polymerisat, welches üblicherweise durch Rühren in Bewegung gehalten wird. In einem bevorzugt angewandten Herstellungsverfahren stellt man die statistisch verteilten Propylencopolymerisate d) dadurch her, daß man in einem Reaktor Propylen zusammen mit dem weiteren $C_2$-$C_{10}$-Alk-1-en bei Drücken von 20 bis 40 bar, Temperaturen von 30 bis 100 °C und mittleren Verweilzeiten von 1 bis 5 Stunden mit Hilfe eines Ziegler-Natta-Katalysatorsystems aus der Gasphase heraus polymerisiert und dabei das Partialdruckverhältnis zwischen Propylen und dem $C_2$-$C_{10}$-Alk-1-en auf 5:1 bis 100:1 einstellt.

Weiterhin kann es sich empfehlen, der erfindungsgemäß einzusetzenden Polymermischung noch ein kautschukartiges Material e) mit einer Shore A-Härte von 40 bis 90 (nach DIN 53505) hinzuzufügen. Bei der Härtebestimmung nach Shore A wird die Eindringtiefe eines Kegelstumpfes in das Probematerial bestimmt. Beispiele für kautschukartige Materialien e) sind u.a. Styrol-Butadien-Blockcopolymerisate, Styrol-Ethylen-ButenTerpolymerisate, Acrylatkautschuke, Ethylen-Propylen-Kautschuke, Ethylen-Propylen-Dien-Kautschuke, Isoprenkautschuke, Styrol-Isoprenkautschuke, Polyisobutylenkautschuke, Ethylen-Vinylacetat-Copolymerisate, Polyurethankautschuke, Nitril-Kautschuke sowie Naturkautschuke. Bevorzugt werden dabei Styrol-Ethylen-Buten-Terpolymerisate, Ethylen-Propylen-Kautschuke, Ethylen-Propylen-Dien-Kautschuke, Polyisobutylenkautschuke und Acrylatkautschuke verwendet.

Das kautschukartige Material e) kann ebenso wie das statistisch verteilte Propylencopolymerisat d) dem Polymerisat a) und dem statistisch verteilten Ethylencopolymerisat b) sowohl vor als auch nach der Umsetzung mit der Organosilanverbindung c) beigemischt werden.

Die in der erfindungsgemäßen, teilvernetzten Kunststoffmasse vorliegende Polymermischung enthält bevorzugt, bezogen auf 100 Gew.-Teile, 40 bis 90 Gew.-Teile Polymerisat a), 5 bis 60 Gew.-Teile statistisch verteiltes Ethylencopolymerisat b), 0 bis 15 Gew.-Teile statistisch verteiltes Propylencopolymerisat d) sowie 0 bis 35 Gew.-Teile kautschukartiges Material e). Besonders bevorzugt ist dabei eine solche Polymermischung, die, bezogen auf 100 Gew.-Teile, aus 50 bis 80 Gew.-Teilen Polymerisat a), 5 bis 25 Gew.-Teilen statistisch verteiltes Ethylencopolymerisat b), 5 bis 15 Gew.-Teile statistisch verteiltes Propylencopolymerisat d) sowie 5 bis 25 Gew.-Teile kautschukartiges Material e) besteht. Nach einem möglichen Herstellungsverfahren werden die einzelnen Bestandteile der Polymermischung, also a), b), sowie gegebenenfalls d) bzw. e), zunächst in einer Mischapparatur, beispielsweise einem Extruder oder einer Mühle vermengt und anschließend durch Umsetzung mit der Organosilanverbindung c) teilweise vernetzt. Nach einem anderen Herstellungsverfahren wird zunächst das Polymerisat a) mit der Organosilanverbindung c) umgesetzt und anschließend die Komponenten b) sowie gegebenenfalls d) und e) hinzugemischt.

Zur Herstellung der erfindungsgemäßen, teilvernetzten Kunststoffmasse werden pro 100 Gew.-Teile der Polymermischung vorzugsweise 0,1 bis 4 Gew.-Teile der Organosilanverbindung c), 0,001 bis 2 Gew.-Teile des radikalischen Initiators und 0,001 bis 0,1 Gew.-Teile des Kondensationskatalysatorsverwendet. Dabei findet eine teilweise Vernetzung der Polymermischung statt.

Die erfindungsgemäßen teilvernetzten Kunststoffmassen weisen einen Schmelzflußindex von 0,01 bis 10 g/10 min., bei 230 °C und unter einem Gewicht von 2,16 kg, auf. Der Schmelzflußindex entspricht dabei der

Menge an Polymerisat, die innerhalb von 10 Minuten aus der nach DIN 53 735 genormten Prüfvorrichtung bei einer Temperatur von 230 °C und unter einem Gewicht von 2,16 kg ausgepreßt wird. Besonders bevorzugt sind dabei solche teilvernetzten Kunststoffmassen, deren Schmelzflußindex 0,02 bis 5 g/10 min, bei 230 °C und unter einem Gewicht von 2,16 kg, beträgt. Sie können in geringerem Umfang noch die in der Kunststofftechnik üblichen Zusatzstoffe wie beispielsweise Talk, Ruß oder Metallcarbonate enthalten.

Durch die Wahl der speziellen Bestandteile der Polymermischung und der Organosilanverbindung c) erhält man teilvernetzte Kunststoffmassen, die sich insbesondere durch eine hohe Formbeständigkeit, eine nach allen Richtungen gleichmäßige Zugfestigkeit und eine leichte Verarbeitbarkeit auszeichnen. Weiterhin sind die erfindungsgemäßen teilvernetzten Kunststoffmassen auf einfache Weise erhältlich, da sowohl die Einführung der Organosilanverbindung c) als auch die sich daran anschließende teilweise Vernetzung in einem Schritt durchgeführt werden können.

Die erfindungsgemäßen teilweise vernetzten Kunststoffmassen eignen sich aufgrund ihrer relativ guten Verarbeitbarkeit insbesondere als Materialien für den Spritzguß, das Blasformen, die Extrusion und die Herstellung von Schäumen. Sie können dabei zur Herstellung von Formkörpern, Folien und Überzugsmaterialien verwendet werden.

Beispiele

Die Beispiele 1-5 sowie die Vergleichsbeispiele A und B wurden in einem Zweischneckenextruder der Firma Werner und Pfleiderer mit einem Länge/Durchmesser-Verhältnis von 33 durchgeführt. Die dabei verwendeten Bestandteile der Polymermischung a), b), sowie gegebenenfalls d) und e) wurden zunächst als Grieß oder Granulat dem Zweischneckenextruder zugeführt, dort aufgeschmolzen und anschließend mit der jeweils eingesetzten Organosilanverbindung c), dem radikalischen Initiator und dem Kondensationskatalysator umgesetzt. Die Organosilanverbindung c), der radikalische Initiator und der Kondensationskatalysator wurden dabei in flüssiger Form, d.h. mit Zusatz von Lösungsmitteln in den Extruder gegeben. Die Umsetzung der Organosilanverbindung c) mit der Polymermischung erfolgte in allen Beispielen bei einer Temperatur von 220 °C, einem Druck von ca. 20 bar und einer mittleren Verweilzeit von mindestens 28 Sekunden.

Beispiel 1

70 Gew.-Teile eines Propylenpolymerisats aus 55 Gew.-% Propylenhomopolymerisat und 45 Gew.-% Propylen-Ethylencopolymerisat [bestimmt durch Extraktionsfraktionierung nach W. Holtrup, Makromol. Chem. 178, 2335 (1977)], einem Ethylengehalt von 23 Gew.-%, bezogen auf das Gesamtpolymerisat [bestimmt durch Infrarotspektroskopie] und einem Schmelzflußindex von 2,1 g/10 min. [bei 230 °C und 2,16 kg, nach DIN 53 735] wurden im Zweischneckenextruder mit 10 Gew.-Teilen eines statistisch verteilten Ethylencopolymerisats mit 16 Gew.-% einpolymerisiertem But-1-en, einem Schmelzflußindex von 1,4 g/10 min [bei 230 °C und 2,16 kg, nach DIN 53 735] und einer Dichte von 0,9 g/cm$^3$ und 20 Gew.-Teilen eines Ethylen-Propylen-Copolymerisats mit einem Propylengehalt von 25 Gew.-%, einem Schmelzflußindex von 3 g/10 min. [bei 230 °C und 10 kg, nach ASTM D 1238] und einer Shore A-Härte von 84 vermischt. 100 Gew.-Teile der auf diese Weise erhaltenen Polymermischung wurden danach im gleichen Zweischneckenextruder mit 0,31 Gew.-Teilen Vinyltrimethoxysilan, 0,026 Gew.-Teilen 2,5-Dimethyl-2,5-di(tert.butylperoxy)-hexan und 0,018 Gew.-Teilen Dibutylzinndilaurat umgesetzt.

Von der erhaltenen teilvernetzten Polymermischung wurde nach dem Castfilmverfahren in einer Breitschlitzfolienanlage der Firma Feud bei einer Massetemperatur von 230 °C und einem Massedruck von 60 bar eine Breitschlitzfolie von 420 mm Breite und 1,1 mm Dicke hergestellt. Der Schmelzflußindex, die Shore D-Härte und die bleibende Dehnung (Maßzahl für die Formbeständigkeit) der Folie sind in der nachfolgenden Tabelle 1 wiedergegeben.

Beispiel 2

70 Gew.-Teile eines Propylenpolymerisats aus 55 Gew.-% Propylenhomopolymerisat und 45 Gew.-% Propylen-Ethylencopolymerisat, einem Ethylengehalt von 23 Gew.-%, bezogen auf das Gesamtpolymerisat und einem Schmelzflußindex von 2,1 g/10 min. [bei 230 °C und 2,16 kg, nach DIN 53735] wurden im Zweischneckenextruder mit 10 Gew.-Teilen eines statistisch verteilten Ethylencopolymerisats mit 16 Gew.-% einpolymerisiertem But-1-en, einem Schmelzflußindex von 1,4 g/10 min [bei 230 °C und 2,16 kg, nach DIN 53 735] und einer Dichte von 0,9 g/cm$^3$ und 20 Gew.-Teilen eines Copolymerisats aus 81 Gew.-% Ethylen und 19 Gew.-% Butylacrylat, einem Schmelzflußindex von 1,8 g/10 min [bei 190 °C und 2,16 kg,

nach DIN 53 735] und einer Shore A-Härte von 88 vermischt. 100 Gew.-Teile der auf diese Weise erhaltenen Polymermischung wurden danach im gleichen Zweischneckenextruder mit 0,31 Gew.-Teilen Vinyltrimethoxysilan, 0,026 Gew.-Teilen 2,5-Dimethyl-2,5-di(tert.butylperoxy)hexan und 0,018 Gew.-Teilen Dibutylzinndilaurat umgesetzt und analog zum Beispiel 1 aufgearbeitet.

Von der erhaltenen teilvernetzten Polymermischung wurde nach dem Castfilmverfahren in einer Breitschlitzfolienanlage der Firma Feud bei einer Massetemperatur von 227 °C und einem Massedruck von 55 bar eine Breitschlitzfolie von 420 mm Breite und 1,1 mm Dicke hergestellt. Der Schmelzflußindex, die Shore D-Härte und die bleibende Dehnung (Maßzahl für die Formbeständigkeit) der Folie sind in der nachfolgenden Tabelle 1 wiedergegeben.

Beispiel 3

65 Gew.-Teile eines Propylenpolymerisats aus 55 Gew.-% Propylenhomopolymerisat und 45 Gew.-% Propylen-Ethylencopolymerisat, einem Ethylengehalt von 23 Gew.-%, bezogen auf das Gesamtpolymerisat und einem Schmelzflußindex von 2,1 g/10 min. [bei 230 °C und 2,16 kg, nach DIN 53735] wurden im Zweischneckenextruder mit 25 Gew.-Teilen eines statistisch verteilten Ethylencopolymerisats mit 16 Gew.-% einpolymerisiertem But-1-en, einem Schmelzflußindex von 1,4 g/10 min [bei 230 °C und 2,16 kg, nach DIN 53 735] und einer Dichte von 0,9 g/cm$^3$ und 10 Gew.-Teilen eines Ethylen-Propylen-Dienkautschuks mit einer Dichte von 0,98 g/cm$^3$ und einer Shore A-Härte von 73 vermischt. 100 Gew.-Teile der auf diese Weise erhaltenen Polymermischung wurden danach im Zweischneckenextruder mit 0,31 Gew.-Teilen Vinyltrimethoxysilan, 0,026 Gew.-Teilen 2,5-Di-methyl-2,5-di(tert.butylperoxy)hexan und 0,018 Gew.-Teilen Dibutylzinndilaurat umgesetzt und analog zum Beispiel 1 aufgearbeitet.

Von der erhaltenen teilvernetzten Polymermischung wurde nach dem Castfilmverfahren in einer Breitschlitzfolienanlage der Firma Feud bei einer Massetemperatur von 227 °C und einem Massedruck von 55 bar eine Breitschlitzfolie von 420 mm Breite und 1,1 mm Dicke hergestellt. Der Schmelzflußindex, die Shore D-Härte und die bleibende Dehnung (Maßzahl für die Formbeständigkeit) der Folie sind in der nachfolgenden Tabelle 1 wiedergegeben.

Vergleichsbeispiel A

100 Gew.-Teile eines Propylenpolymerisats aus 55 Gew.-% Propylenhomopolymerisat und 45 Gew.-% Propylen-Ethylencopolymerisat, einem Ethylengehalt von 23 Gew.-%, bezogen auf das Gesamtpolymerisat und einem Schmelzflußindex von 2,1 g/10 min. [bei 230 °C und 2,16 kg, nach DIN 53735] wurden im Zweischneckenextruder mit 0,45 Gew.-Teilen Vinyltrimethoxysilan, 0,04 Gew.-Teilen 2,5-Dimethyl-2,5-di-(tert.butylperoxy)hexan und 0,025 Gew.-Teilen Dibutylzinndilaurat umgesetzt und analog zum Beispiel 1 aufgearbeitet.

Von dem dabei erhaltenen Polymerisat wurde nach dem Castfilmverfahren in einer Breitschlitzfolienanlage der Firma Feud bei einer Massetemperatur von 220 °C und einem Massedruck von 44 bar eine Breitschlitzfolie von 420 mm Breite und 1,1 mm Dicke hergestellt. Der Schmelzflußindex, die Shore D-Härte und die bleibende Dehnung (Maßzahl für die Formbeständigkeit) der Folie sind in der nachfolgenden Tabelle 1 wiedergegeben.

Tabelle 1

| | Beispiele | | | Vergleichsbeispiel A |
|---|---|---|---|---|
| | 1 | 2 | 3 | |
| Schmelzflußindex[a] [g/10 min] | 0,03 | 0,21 | 0,35 | 0,4 |
| Shore D-Härte[b] | 33 | 35 | 36 | 49 |
| bleibende Dehnung[c] [%] | 81 | 80 | 72 | 101 |

[a] nach DIN 53 735, bei 230 °C und unter einem Gewicht von 2,16 kg
[b] nach DIN 53 505, Methode D, Messen der Eindringtiefe eines Kegels in das Probenmaterial
[c] nach 2 Stunden, Messung an 15 mm breiten und 160 mm langen Folienstreifen, die mit Hilfe eines Zugapparates entsprechend DIN 53 455 mit einer Geschwindigkeit von 50 mm/min um 200 % gedehnt wurden.

Aus den Ergebnissen der Tabelle 1 wird ersichtlich, daß sich die erfindungsgemäßen teilvernetzten Kunststoffmassen gegenüber dem aus dem Vergleichsversuch erhaltenen Polymerisat vor allem durch eine verbesserte Verarbeitbarkeit, d.h. eine höhere Weichheit (verringerte Shore D-Härte) und eine höhere Formbeständigkeit (verringerte bleibende Dehnung) auszeichnen.

Beispiel 4

55 Gew.-Teile des im Vergleichsbeispiel A erhaltenen Polymerisats wurden im Zweischneckenextruder mit 25 Gew.-Teilen eines statistisch verteilten Ethylencopolymerisats mit 16 Gew.-% einpolymerisiertem But-1-en, einer Dichte von 0,9 g/cm$^3$ und einem Schmelzflußindex von 1,4 g/10 min. [bei 230 °C und 2,16 kg, nach DIN 53 735], 10 Gew.-Teilen eines statistisch verteilten Propylencopolymerisats mit 4 Gew.-% einpolymerisiertem Ethylen und 2 Gew.-% But-1-en und einem Schmelzflußindex von 5 g/10 min. [bei 230 °C und 2,16 kg, nach DIN 53 735], sowie 10 Gew.-Teilen eines Styrol-Ethylen-Buten-Terpolymerisats mit einem Schmelzflußindex von 2,4 g/10 min. [bei 230 °C und 2,16 kg, nach DIN 53 735] und einer Shore A-Härte von 75 vermischt und analog dem Beispiel 1 aufgearbeitet. Der teilvernetzten Polymermischung wurden ferner noch pro 100 Gew.-Teile Polymermischung 0,25 Gew.-Teile Ruß als Zusatzstoff hinzugefügt.

Von der erhaltenen teilvernetzten Polymermischung wurde nach dem Castfilmverfahren in einer Breitschlitzfolienanlage der Firma Feud bei einer Massetemperatur von 228 °C und einem Massedruck von 60 bar eine Breitschlitzfolie von 420 mm Breite und 1,1 mm Dicke hergestellt. Der Schmelzflußindex und die relativen Unterschiede in bezug auf das Zug E-Modul, die Streckspannung und die Reißfestigkeit der Folie sind in der nachfolgenden Tabelle 2 wiedergegeben.

Beispiel 5

55 Gew.-Teile eines Propylenpolymerisats aus 55 Gew.-% Propylenhomopolymerisat und 45 Gew.-% Propylen-Ethylencopolymerisat, einem Ethylengehalt von 23 Gew.-%, bezogen auf das Gesamtpolymerisat und einem Schmelzflußindex von 2,1 g/10 min [bei 230 °C und 2,16 kg, nach DIN 53 735] wurden im Zweischneckenextruder mit 25 Gew.-Teilen eines statistisch verteilten Ethylencopolymerisats mit 16 Gew.-% einpolymerisiertem But-1-en, einer Dichte von 0,9 g/cm$^3$ und einem Schmelzflußindex von 1,4 g/10 min [bei 230 °C und 2,16 kg, nach DIN 53 735], 10 Gew.-Teilen eines statistisch verteilten Propylencopolymerisats mit 4 Gew.-% einpolymerisiertem Ethylen und 2 Gew.-% Buten und einem Schmelzflußindex von 5 g/10 min [bei 230 °C und 2,16 kg, nach DIN 53 735], sowie 10 Gew.-Teilen eines styrol-Ethylen-Buten-Terpolymerisats mit einem Schmelzflußindex von 2,4 g/10 min [bei 230 °C und 2,16 kg, nach DIN 53 735] und mit einer Shore A-Härte von 75 vermischt. Weiterhin wurde dieser Polymermischung pro 100 Gew.-Teile noch 0,25 Gew.-Teile Ruß hinzugefügt. 100 Gew.-Teile der auf diese Weise erhaltenen Polymermischung wurden danach im gleichen Zweischneckenextruder mit 0,3 Gew.-Teilen Vinyltrimethoxysilan, 0,03 Gew.-Teilen 2,5-Dimethyl-2,5-di(tert.butylperoxy)hexan und 0,018 Gew.-Teilen Dibutylzinndilaurat umgesetzt und analog zum Beispiel 1 aufgearbeitet.

Von der erhaltenen teilvernetzten Polymermischung wurde nach dem Castfilmverfahren in einer Breitschlitzfolienanlage der Firma Feud analog den übrigen Beispielen eine Breitschlitzfolie von 420 mm Breite und 1,1 mm Dicke hergestellt. Der Schmelzflußindex, die Shore D-Härte und die relativen Unterschiede in bezug auf das Zug E-Modul, die Streckspannung und die Reißfestigkeit der Folie sind in der nachfolgenden Tabelle 2 wiedergegeben.

Vergleichsbeispiel B

55 Gew.-Teile eines Propylencopolymerisats aus 55 Gew.-% Propylenhomopolymerisat und 45 Gew.-% Propylen-Ethylencopolymerisat, einem Ethylengehalt von 23 Gew.-%, bezogen auf das Gesamtpolymerisat und einem Schmelzflußindex von 2,1 g/10 min [bei 230 °C und 2,16 kg nach DIN 53 735] wurden im Zweischneckenextruder mit 25 Gew.-Teilen eines statistisch verteilten Ethylencopolymerisats mit 16 Gew.-% einpolymerisiertem But-1-en, einer Dichte von 0,9 g/cm$^3$ und einem Schmelzflußindex von 1,4 g/10 min [bei 230 °C und 2,16 kg, nach DIN 53 735], 10 Gew.-Teilen eines statistisch verteilten Propylencopolymerisats mit 4 Gew.-% einpolymerisiertem Ethylen und 2 Gew.-% But-1-en und einem Schmelzflußindex von 5,0 g/10 min [bei 230 °C und 2,16 kg, nach DIN 53 735], sowie 10 Gew.-Teilen eines Styrol-Ethylen-Buten-Terpolymerisats mit einem Schmelzflußindex von 2,4 g/10 min [bei 230 °C und 2,16 kg, nach DIN 53 735] und einer Shore A-Härte von 75 vermischt. Weiterhin wurde dieser Polymermischung pro 100 Gew.-Teile noch 0,25 Gew.-Teile Ruß hinzugefügt. Die auf diese Weise erhaltene Polymermischung wurde ohne Zugabe einer Organosilanverbindung c), eines radikalischen Initiators und eines Kondensationskatalysators

analog dem Beispiel 1 aufgearbeitet.

Von der erhaltenen teilvernetzten Polymermischung wurde nach dem Castfilmverfahren in einer Breitschlitzfolienanlage der Firma Feud bei einer Massetemperatur von 235 °C und einem Massedruck von 74 bar eine Breitschlitzfolie von 420 mm Breite und 1,1 mm Dicke hergestellt. Der Schmelzflußindex und die relativen Unterschiede in bezug auf das Zug E-Modul, die Streckspannung und die Reißfestigkeit der Folie sind in der nachfolgenden Tabelle 2 wiedergegeben.

Tabelle 2

| | Beispiele | | Vergleichsbeispiel B |
|---|---|---|---|
| | 4 | 5 | |
| Schmelzflußindex[a] [g/10 min] | 0,4 | 1,0 | 1,7 |
| Relativer Unterschied (Δ) in bezug auf | | | |
| Zug E-Modul[b] | 0,2 | 0,31 | 0,41 |
| Streckspannung[c] | 0,05 | 0,07 | 0,14 |
| Reißfestigkeit[c] | 0,26 | 0,23 | 0,34 |

[a] nach DIN 53 735, bei 230 °C und unter einem Gewicht von 2,16 kg
[b] nach DIN 53 457 mit einem Schulterstab S2, ausgestanzt aus der Folie längs und quer zur Extrusionsrichtung, Abzugsgeschwindigkeit 1 mm/min
[c] nach DIN 53 455

Der in der Tabelle 2 aufgeführte Unterschied bezüglich der Eigenschaften Zug E-Modul, Streckspannung und Reißfestigkeit bezieht sich immer auf Unterschiede in den Meßergebnissen in Längs- und Querrichtung. Dieser relative Unterschied (Δ) wird dabei nach folgender Formel ermittelt:

$$\Delta = \left| \frac{E_L - E_Q}{E_L} \right|$$

$E_L$: Eigenschaft in Längsrichtung der Folie
$E_Q$: Eigenschaft in Querrichtung der Folie
Dabei bedeuten geringe relative Unterschiede (Δ) eine weitgehend richtungsunabhängige Formbeständigkeit der Probekörper.

Wie aus dem Vergleich zwischen den Beispielen 4 und 5 mit dem Vergleichsbei spiel B hervorgeht, zeichnen sich die erfindungsgemäßen teilvernetzten Polymermischungen insbesondere durch eine in allen Richtungen weitgehend konstante Formbeständigkeit aus.

**Patentansprüche**

**1.** Teilvernetzte Kunststoffmasse, enthaltend

a) ein Polymerisat aus 25 bis 95 Gew.-% Polypropylen und 5 bis 75 Gew.-% eines Propylencopolymerisats mit einpolymerisierten $C_2$-$C_{10}$-Alk-1-enen, wobei der Comonomerengehalt 1 bis 45 Gew.-%, bezogen auf das Gesamtpolymerisat beträgt,

b) ein statistisch verteiles Ethylencopolymerisat mit 5 bis 20 Gew.-% an einpolymerisierten $C_3$-$C_{10}$-Alk-1-enen und einer Dichte bei Raumtemperatur von 0,89 bis 0,925 g/cm$^3$ und

c) eine Organosilanverbindung der folgenden Formel (I)

$A_{4-n}SiR_n$ (I)

wobei A gleich oder verschieden ist und für einen Acryl- oder Methacrylsäureester oder für eine Vinylgruppe steht, R gleich oder verschieden ist und eine $C_1$-$C_8$-Alkoxy- oder $C_1$-$C_8$-Acetoxygruppe bedeutet und n für die Zahlen 1, 2 oder 3 steht,

erhältlich durch Umsetzung einer Polymermischung aus dem Polymerisat a) und dem statistisch verteilten Ethylencopolymerisat b) mit der Organosilanverbindung c) in Anwesenheit eines radikalischen Initiators und eines Kondensationskatalysators, bei Temperaturen von 180 bis 280 °C, Drükken von 1 bis 100 bar und mittleren Verweilzeiten des Reaktionsgemisches von 0,2 bis 10 Minuten.

**2.** Teilvernetzte Kunststoffmasse nach Anspruch 1, die als weiteren Bestandteil
d) ein statistisch verteiltes Propylencopolymerisat mit 1 bis 10 Gew.-% an einpolymerisierten $C_2$-$C_{10}$-Alk-1-enen enthält.

**3.** Teilvernetzte Kunststoffmasse nach den Ansprüchen 1 oder 2, die als weiteren Bestandteil
e) ein kautschukartiges Material mit einer Shore A-Härte von 40 bis 90 enthält.

**4.** Teilvernetzte Kunststoffmasse nach den Ansprüchen 1 bis 3, wobei die Polymerisate a), b), d) und e) in folgenden Mengenverhältnissen, bezogen auf 100 Gew.-Teile, verwendet werden:
40 bis 90 Gew.-Teile Polymerisat a)
5 bis 60 Gew.-Teile statistisch verteiltes Ethylencopolymerisat b)
0 bis 15 Gew.-Teile statistisch verteiltes Propylencopolymerisat d)
0 bis 35 Gew.-Teile kautschukartiges Material e).

**5.** Teilvernetzte Kunststoffmasse nach den Ansprüchen 1 bis 4, wobei pro 100 Gew.-Teile der Komponenten a), b) und, falls vorhanden, d) und e) 0,1 bis 4 Gew.-Teile der Organosilanverbindung c) verwendet werden.

**6.** Teilvernetzte Kunststoffmasse nach den Ansprüchen 1 bis 5, in deren Organosilanverbindung c) R für eine $C_1$-$C_8$-Alkoxygruppe und n für 3 steht.

**7.** Verwendung der teilvernetzten Kunststoffmassen gemäß den Ansprüchen 1 bis 6 zur Herstellung von Folien und Formkörpern.

**8.** Formkörper, hergestellt aus teilvernetzten Kunststoffmassen gemäß den Ansprüchen 1 bis 6.

## Claims

**1.** A partially crosslinked polymer composition comprising
a) a polymer comprising from 25 to 95% by weight of polypropylene and from 5 to 75% by weight of a propylene copolymer with copolymerized $C_2$-$C_{10}$-alk-1-enes, the comonomer content being from 1 to 45% by weight, based on the total polymer,
b) a random ethylene copolymer containing from 5 to 20% by weight of copolymerized $C_3$-$C_{10}$-alk-1-enes and having a density at room temperature of from 0.89 to 0.925 g/cm$^3$, and
c) an organosilane compound of the formula (I)

$$A_{4-n}SiR_n \qquad (I)$$

where A are identical or different acrylates or methacrylates or vinyl groups, R are identical or different $C_1$-$C_8$-alkoxy or $C_1$-$C_8$-acetoxy groups, and n is 1, 2 or 3,
and obtainable by reacting a polymer mixture of the polymer a) and the random ethylene copolymer b) with the organosilane compound c) in the presence of a free-radical initiator and in the presence of a condensation catalyst at from 180 to 280 °C, at from 1 to 100 bar and at a mean residence time of the reaction mixture of from 0.2 to 10 minutes.

**2.** A partially crosslinked polymer composition as claimed in claim 1, which contains, as a further constituent,
d) a random propylene copolymer containing from 1 to 10% by weight of copolymerized $C_2$-$C_{10}$-alk-1-enes.

**3.** A partially crosslinked polymer composition as claimed in claim 1 or 2, which contains, as a further constituent,
e) a rubber-like material having a Shore A hardness of from 40 to 90.

4. A partially crosslinked polymer composition as claimed in claim 1 or 2 or 3, where the polymers a), b), d) and e) are used in the following ratio, based on 100 parts by weight:
from 40 to 90 parts by weight of polymer a)
from 5 to 60 parts by weight of the random ethylene copolymer b)
from 0 to 15 parts by weight of the random propylene copolymer d)
from 0 to 35 parts by weight of the rubber-like material e).

5. A partially crosslinked polymer composition as claimed in claim 1 or 2 or 3 or 4, where from 0.1 to 4 parts by weight of the organosilane compound c) are used per 100 parts by weight of components a), b) and, if present, d) and e).

6. A partially crosslinked polymer composition as claimed in claim 1 or 2 or 3 or 4 or 5, in whose organosilane compound c) R is $C_1$-$C_8$-alkoxy, and n is 3.

7. The use of a partially crosslinked polymer composition as claimed in claim 1 or 2 or 3 or 4 or 5 or 6 for the production of films and moldings.

8. A molding produced from a partially crosslinked polymer composition as claimed in claim 1 or 2 or 3 or 4 or 5 or 6.

**Revendications**

1. Masse de matière plastique partiellement réticulée, contenant
a) un polymère de 25 à 95% en poids de polypropylène et de 5 à 75% en poids d'un copolymère de propylène avec des alcènes-1 en $C_2$-$C_{10}$ en liaison polymère, la teneur en comonomères étant comprise entre 1 et 45% en poids par rapport au polymère total,
b) un copolymère statistique d'éthylène avec 5 à 20% en poids d'alcènes-1 en $C_3$-$C_{10}$ en liaison polymère, ayant une masse volumique à la température ambiante de 0,89 à 0,925 g/cm$^3$, et
c) un composé organique de silane de formule (I) suivante

$A_{4-n}SiR_n$ (I)

les restes A étant identiques ou différents et étant mis chacun pour un ester d'acide acrylique ou méthacrylique ou pour un groupement vinyle, les restes R étant identiques ou différents et représentant chacun un groupement alcoxy en $C_1$-$C_8$ ou acétoxy en $C_1$-$C_8$ et n étant mis pour les nombres 1, 2 ou 3,
pouvant être obtenue par réaction d'un mélange du polymère a) et du copolymère statistique d'éthylène b) avec le composé organique de silane c) en présence d'un amorceur radicalaire et d'un catalyseur de condensation, à des températures de 180 à 280 °C, sous des pressions de 1 à 100 bar et avec des temps moyens de séjour du mélange réactionnel de 0,2 à 10 min.

2. Masse de matière plastique partiellement réticulée selon la revendication 1, contenant comme autre constituant
d) un copolymère statistique de propylène avec 1 à 10% en poids d'alcènes-1 en $C_2$-$C_{10}$ en liaison polymère.

3. Masse de matière plastique partiellement réticulée selon la revendication 1 ou 2, contenant comme autre constituant
e) une matière caoutchouteuse ayant une dureté Shore A de 40 à 90.

4. Masse de matière plastique partiellement réticulée selon l'une quelconque des revendications 1 à 3, les polymères a), b), d) et e) étant utilisés dans les proportions suivantes, par rapport à 100 parties en poids:
40 à 90 parties en poids de polymère a),
5 à 60 parties en poids de copolymère statistique d'éthylène b),
0 à 15 parties en poids de copolymère statistique de propylène d),
0 à 35 parties en poids de matière caoutchouteuse e).

**5.** Masse de matière plastique partiellement réticulée selon l'une quelconque des revendications 1 à 4, dans laquelle il est utilise de 0,1 à 4 parties en poids du compose organique de silane c) pour 100 parties en poids des composants a), b) et, s'ils sont présents, d) et e).

**6.** Masse de matière plastique partiellement réticulée selon l'une quelconque des revendications 1 à 5, dans le compose organique de silane c) de laquelle R est mis pour un groupement alcoxy en $C_1$-$C_8$ et n est mis pour 3.

**7.** Utilisation des masses de matière plastique partiellement réticulées selon l'une quelconque des revendications 1 à 6 pour la fabrication de feuilles et de corps moulés.

**8.** Corps moulés, fabriqués à partir de masses de matière plastique partiellement réticulées selon l'une quelconque des revendications 1 à 6.